# EUROPÄISCHE PATENTSCHRIFT

(11) **EP 2 077 956 B1**
(45) Veröffentlichungstag und Bekanntmachung des Hinweises auf die Patenterteilung: **01.12.2010**
(21) Anmeldenummer: 07820260.3
(22) Anmeldetag: 17.09.2007
(51) Int. Cl.: B60R 21/34, B60S 1/50, B62D 25/08

(54) **TRÄGER FÜR DIE FRONTEINHEIT EINES KRAFTFAHRZEUGS UND VERFAHREN ZU DESSEN HERSTELLUNG**
SUPPORT FOR THE FRONT UNIT OF A MOTOR VEHICLE AND METHOD FOR ITS PRODUCTION
SUPPORT POUR L'UNITÉ AVANT D'UN VÉHICULE AUTOMOBILE, ET SON PROCÉDÉ DE FABRICATION

(30) Priorität: 06.10.2006 DE 102006047800
(43) Veröffentlichungstag der Anmeldung: 15.07.2009
(60) Teilanmeldung: 10173274.1
(73) Patentinhaber: Faurecia Kunststoffe Automobilsysteme GmbH, 85057 Ingolstadt (DE)
(72) Erfinder: JOLY-POTTUZ, Pascal, 85101 Lenting (DE)
(74) Vertreter: Richardt, Markus Albert
(86) Internationale Anmeldenummer: PCT/EP2007/059793
(87) Internationale Veröffentlichungsnummer: WO 2008/043642

(56) Entgegenhaltungen:
- EP-A- 1 024 075
- EP-A- 1 036 730
- EP-A- 1 232 932
- EP-A- 1 457 406
- WO-A-01/39949
- DE-A1- 19 946 995
- DE-T2- 60 024 933
- DE-U1-202006 001 307
- FR-A- 2 809 061
- FR-A- 2 879 517
- US-A1- 2004 262 952

## Beschreibung

Die Erfindung betrifft einen Träger für die Fronteinheit eines Kraftfahrzeugs, ein Verfahren zu dessen Herstellung sowie eine Kraftfahrzeug-Fronteinheit.

Die EP 1 232 932 A1 zeigt einen Träger für die Fronteinheit eines Kraftfahrzeugs mit einem Trägerteil zur Verbindung mit den Kotflügeln und dem Fahrgestell des Kraftfahrzeugs. An dem Trägerteil wird ein Fassungsteil zur Aufnahme einer Scheinwerfereinheit und zur Verbindung mit einem Stoßfänger befestigt.

Weitere ähnliche Fronteinheiten sind aus der FR 2 809 061 und der DE 199 46 995 A1 bekannt geworden.

Ferner ist aus der DE 600 00 006 T2 ein Frontzusammenbau für ein Fahrzeug mit einer Tragstruktur und einem Scheinwerfer bekannt, wobei der Scheinwerfer an der Tragstruktur zwischen einer vormontierten und einer endmontierten Position um eine geneigte Achse drehbar befestigt ist.

Aus der EP 1 036 730 A2 ist ein Verfahren zur toteranzgenauen Montage von Bestandteile eines Kraftfahrzeug-Vorderwagens bekannt Hierbei kann eine Vielzahl von sich gegenseitig beeinflussenden Toleranzen berücksichtigt werden.

Die DE 20 2006 001 307.5 offenbart einen Kraftfahrzeug-Längsträger und eine Kraftfahrzeug-Fronteinheit mit einem Stoßfänger-Querträger und beidseitig an dem Stoßfänger-Querträger angeordneten Flanschen, wobei die Flansche Befestigungsmittel zur Befestigung der Kraftfahrzeug-Fronteinheit an den Kraftfahrzeug-Längsträgern aufweisen.

Die DE 600 24 933 T2 offenbart eine Einbaueinheit für ein Frontend eines Fahrzeuges, wobei das Frontend zwei Teile umfasst, wobei eines der Teile mindestens einen Flüssigkeitsspeicherbehälter umfasst.

Solche Träger werden üblicherweise als Hybridstrukturen aus Metall und Kunststoff hergestellt.

Der Erfindung liegt demgegenüber die Aufgabe zugrunde, einen verbesserten Träger für die Fronteinheit eines Kraftfahrzeugs, eine Kraftfahrzeug-Fronteinheit sowie ein Herstellungsverfahren für den Träger der Fronteinheit zu schaffen.

Die der der Erfindung zugrunde liegenden Aufgaben werden jeweils mit den Merkmalen der unabhängigen Patentansprüche gelöst Ausführungsformen der Erfindung sind in den abhängigen Patentansprüchen angegeben.

Nach einer Ausführungsform der Erfindung wird ein Träger für die Fronteinheit eines Kraftfahrzeugs geschaffen, in den ein Behälter zur Aufnahme einer Betriebsflüssigkeit integriert ist. Der Behälter ist dabei so in dem Träger angeordnet, dass er sich nach dem Einbau des Trägers in dem Kraftfahrzeug in Höhe eines Bein- und/oder Hüftaufprallbereichs eines Fußgängers befindet.

Diese Anordnung des Behälters führt zu einem verbesserten Fußgängerschutz, da der Behälter deformierbar ist und damit bei einem Aufprall eines Fußgängers auf die Fahrzeugfront als Energieabsorptionskörper wirkt. Insbesondere kann durch den Behälter ein Deformationsweg im Übergangsbereich zwischen der Fahrzeugfront und der Fahrzeughaube geschaffen werden. Dies ist auch insbesondere in Verbindung mit einer so genannten ;,aktiven Haube" vorteilhaft. Als "aktive Haube" wird eine Vorrichtung bezeichnet, die nach Erkennung eines bevorstehenden Fußgängeraufpralls durch einen Sensor die Fronthaube des Kraftfahrzeugs anhebt.

Nach einer Ausführungsform der Erfindung wird durch die Oberseite des Behälters eine obere Begrenzung des Trägers gebildet. Beispielsweise besteht der Träger aus einem Trägerteil, der einen Aufnahmebereich für den Behälter hat. Nach Integration des Behälters in den Aufnahmebereich wird die obere Begrenzung des Trägers zum Beispiel in einem mittleren Bereich des Trägers durch die Oberseite des Behälters gebildet.

Nach einer Ausführungsform der Erfindung hat der Behälter eine Öffnung zum Nachfüllen der Betriebsflüssigkeit, beispielsweise für Wasser für eine Wischwaschanlage. Diese Öffnung ist von der Oberseite des Trägers und/oder der Oberseite des Behälters her zugänglich. Dies hat erhebliche Handhabungsvorteile, da man sich nicht über den Motorraum beugen muss, um Wasser nachzufüllen.

Nach einer Ausführungsform der Erfindung besteht der Behälter aus einem transparenten oder teiltransparenten Kunststoffmaterial. Dies vereinfacht die visuelle Überprüfung, ob in dem Behälter noch genügend Betriebsflüssigkeit ist. Dies hat den besonderen Vorteil, dass unmittelbar bei Öffnung der Fronthaube erkennbar ist, ob und wieviel Betriebsflüssigkeit in dem Behälter ist.

Nach einer Ausführungsform der Erfindung wird durch eine Wandung des Behälters ein Aufnahmebereich für ein Schloss der Kraftfahrzeug-Fronthaube gebildet. Beispielsweise hat der Behälter eine Einbuchtung, durch die der Aufnahmebereich gebildet wird. Vorzugsweise ist die Erstreckung des Aufnahmebereichs in x-Richtung etwas länger als die Länge des Schloss, sodass der Aufnahmebereich nach vorne auch bei eingebautem Schloss durch einen Abschnitt des Behälters abgeschlossen wird. Dies hat den Vorteil, dass auch bei einem Fußgängeraufprall im Bereich des Schloss ein genügend langer Deformationsweg zur Verfügung steht.

Nach einer Ausführungsform der Erfindung ist an dem Behälter ein Befestigungsbereich ausgebildet, mit dem der Träger und das Schloss an der Karosserie des Kraftfahrzeugs befestigt werden. Dies kann beispielsweise durch Schraubverbindungen erfolgen. Der Befestigungsbereich ist vorzugsweise massiv ausgebildet. Mit anderen Worten wird hier durch den Befestigungsbereich kein Hohlraum zur Aufnahme der Betriebsflüssigkeit gebildet, um eine Verschraubung mit der erforderlichen Steifigkeit zu gewährleisten.

Nach einer Ausführungsform der Erfindung ist der Behälter entlang eines Obergurtbereichs des Trägers der Fronteinheit angeordnet.

Nach einer Ausführungsform der Erfindung sind innerhalb des Behälters Rippen angeordnet. Die Rippen sind beispielsweise im Wesentlichen quer zu einer Erstreckung des Obergurtbereichs angeordnet. Eine Verstärkung des Behälters durch die Rippen ist vorteilhaft, da im Obergurtbereich des Trägers lokal hohe Beanspruchungen auftreten können. Insbesondere die in dem Behälter angeordneten Querrippen sind zur Aufnahme von auf dem Träger wirkenden Torsionskräften vorteilhaft.

Die Verstärkung des Behälters mit Hilfe von Rippen hat den weiteren Vorteil, dass auf Metalleinleger in dem Trägerteil teilweise oder ganz verzichtet werden kann. Dies hat eine weitere Verbesserung des Fußgängerschutzes zur Folge sowie eine Gewichtsersparnis und eine vereinfachte Herstellung des Trägerteils.

Nach einer Ausführungsform der Erfindung wird der Behälter durch die Rippen in Segmente unterteilt. Die Segmente werden durch einen in dem Behälter ausgebildeten Kanal miteinander verbunden, sodass ein Austausch der Betriebsflüssigkeit zwischen den Segmenten stattfinden kann. Beispielsweise ist der Kanal rinnenförmig in einem unteren Bereich des Behälters ausgebildet.

Nach einer Ausführungsform der Erfindung ist der Behälter mit dem Träger in seinen Randbereichen durch eine Schweißverbindung verbunden. Beispielsweise wird der Behälter durch ein Vibrationsschweißverfahren oder durch so genanntes Mirror Welding mit dem Träger verbunden. Insbesondere kann der Behälter in seinem linken und rechten Randbereich durch eine Schweißverbindung mit dem Trägerteil verbunden werden.

Nach einer Ausführungsform der Erfindung ist der Behälter zwei- oder mehrteilig ausgebildet. Beispielsweise besteht der Behälter aus einem unteren und einem oberen Behälterteil. Die Verbindung der Behälterteile kann durch eine Schweißverbindung, insbesondere durch Vibrationsschweißen oder Mirror Welding, erfolgen oder durch Umspritzen der Behälterteile, beispielsweise mit einem so genannten Multi-Injection-Verfahren oder einem Billion-Prozess.

Nach einer Ausführungsform der Erfindung ist der Behälter durch Umspritzen in den Träger integriert. Bei dem Träger kann es sich also um ein Kunststoffspritzgussteil handeln.

In einem weiteren Aspekt betrifft die Erfindung Herstellungsverfahren zur Herstellung eines erfindungsgemäßen Trägers bzw. einer erfindungsgemäßen Kraftfahrzeug-Fronteinheit.

Nach einer Ausführungsform eines erfindungsgemäßen Verfahrens erfolgt zunächst getrennt die Herstellung des Behälters und des Trägerteils, wobei das Trägerteil einen Aufnahmebereich für den Behälter aufweist. Sowohl der Behälter als auch das Trägerteil können mit Hilfe eines Kunststoffspritzgussverfahrens hergestellt werden. Dabei kann der Behälter einteilig hergestellt werden oder als mehrere Behälterteile, die dann zum Beispiel durch Schweißen oder Umspritzen zusammengefügt werden.

Nach der Herstellung des Behälters und des Trägerteils wird der Behälter in das Trägerteil integriert, zum Beispiel durch Verschweißen, Umspritzen und/oder Schraubverbindungen.

Nach einer Ausführungsform der Erfindung wird der Behälter oder dessen Behälterteile als Einleger für die Herstellung des Trägers in einem Kunststoffspritzgussverfahren verwendet. Der Behälter oder dessen Behälterteile werden also in ein Kunststoffspritzgusswerkzeug eingelegt. Bei dem nachfolgenden Kunststoffspritzgussvorgang entsteht der komplette Träger durch Umspritzen des Behälters oder der Behälterteile.

Als Kunststoff für die Herstellung des Trägers in einem Kunststoffspritzgussverfahren kommen beispielsweise Polyamid oder Polypropylen in Frage. Für die Herstellung des Behälters oder dessen Behälterteile kommen beispielsweise Polypropylen, Polyethylen oder Polyethylenethylen-Terephthalat (PET) in Frage.

Im Weiteren werden Ausführungsformen der Erfindung mit Bezugnahme auf die Zeichnungen näher erläutert. Es zeigen:
- Figur 1: eine perspektivische Ansicht einer Ausführungsform eines erfindungs- gemäßen Trägers mit einem integrierten Behälter,
- Figur 2: eine perspektivische Ansicht eines unteren Behälterteils,
- Figur 3: eine Draufsicht auf das Behälterteil der Figur 2,
- Figur 4: eine perspektivische Ansicht eines oberen Behälterteils,
- Figur 5: eine Verbindung einer Rippe des oberen Behälterteils mit dem unteren Behälterteil,
- Figur 6: eine perspektivische Ansicht einer weiteren Ausführungsform eines er- findungsgemäßen Trägers mit einem umspritzten Behälter,
- Figur 7: eine Schnittansicht des Trägers der Figur 6 im Bereich des Behälters.

In der Beschreibung der nachfolgenden Ausführungsformen der Erfindung werden einander entsprechende Elemente mit gleichen Bezugszeichen gekennzeichnet.

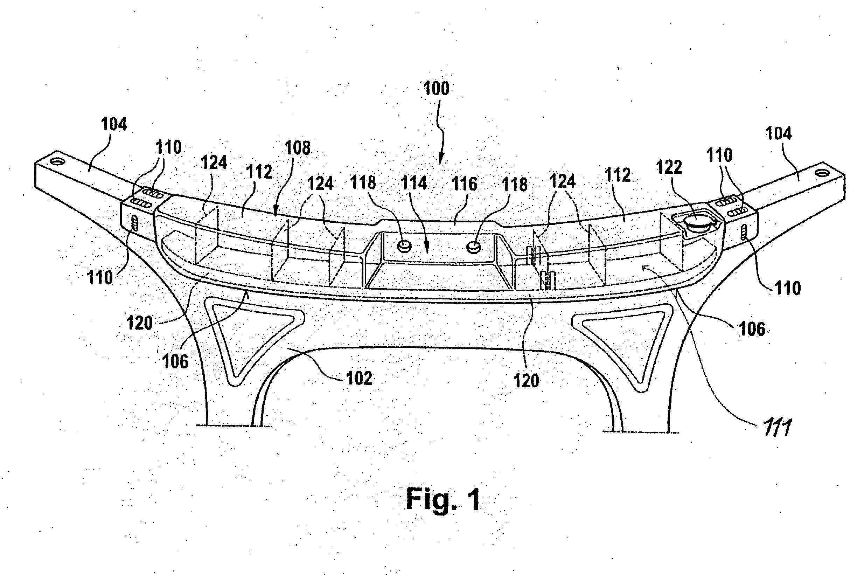

Die Figur 1 zeigt eine perspektivische Ansicht einer Ausführungsform eines erfindungsgemäßen Trägers 100 für eine Kraftfahrzeug-Fronteinheit. Ein solcher Träger 100 wird auch als Front-End-Montageträger bezeichnet.

Der Träger 100 hat ein Trägerteil 102 zur Verbindung mit der Karosserie eines Kraftfahrzeugs, wie zum Beispiel mit den Kraftfahrzeug-Längsträgern und/oder mit den Kotflügelbänken des Kraftfahrzeugs. In seinem Obergurtbereich 104 hat das Trägerteil 102 einen Aufnahmebereich 106 für einen Behälter 108, der sich entlang des Obergurtbereichs 104 des Trägerteils 102 erstreckt. Vorzugsweise sind der Aufnahmebereich 106 und der Behälter 108 mittig angeordnet, wie in der Figur 1 dargestellt.

In der hier betrachteten Ausführungsform werden das Trägerteil 102 und der Behälter 108 zunächst als separate Komponenten hergestellt. Danach wird der Behälter 108 in den Aufnahmebereich 106 des Trägerteils 102 integriert, indem er dort mit geeigneten Maßnahmen befestigt wird. Beispielsweise erfolgt dies über Schweißverbindungen und/oder Verschraubungen.

In der hier betrachteten Ausführungsform ist der Behälter 108 in seinen linken und rechten Randbereichen durch Schweißverbindungen 110 mit dem Trägerteil 102 verbunden. Zur Herstellung der Schweißverbindungen kann beispielsweise ein Ultraschall-Schweißverfahren eingesetzt werden. Hierzu wird das Trägerteil 102 eingespannt. Der in dem Aufnahmebereich 106 positionierte Behälter 108 wird mit Hilfe einer Sonotrode in Schwingungen versetzt, sodass die Schweißverbindungen 110 entstehen.

Alternativ kann auch ein so genanntes Mirror-Welding-Verfahren eingesetzt werden, bei denen die miteinander zu verschweißenden Bereiche des Trägerteils 102 und des Behälters 108 erwärmt und anschließend zusammengepresst werden.

Nach Integration des Behälters 108 in das Trägerteil 102 bildet also die Oberseite 112 des Behälters 108 zugleich die obere Begrenzung des Trägers 100 in dessen mittleren Bereich.

In der hier betrachteten Ausführungsform bildet der Behälter 108 einen Aufnahmebereich 114 für ein Schloss einer Fronthaube des Kraftfahrzeugs. Der Aufnahmebereich 114 ist nach hinten durch einen Befestigungsbereich 116 abgeschlossen. Der Befestigungsbereich 116 dient zur Befestigung des Behälters 108 und des Schloss an der Karosserie des Kraftfahrzeugs. Hierzu hat der Befestigungsbereich 116 Löcher 118 für die Hindurchführung von Schrauben. Diese Schrauben verlaufen von einem Karosserieteil des Kraftfahrzeugs durch die Löcher 118 hindurch zu dem Schloss. Durch Festziehen der Schrauben werden also sowohl das Schloss als auch der Behälter 108 an der Karosserie des Kraftfahrzeugs befestigt.

Der Befestigungsbereich 116 ist massiv ausgebildet, d.h. er umschließt keinen Hohlraum für die Aufnahme der Betriebsflüssigkeit. Dadurch erhält der Befestigungsbereich 116 die notwendige Steifigkeit für die Befestigung des Behälters 108 und des Schlosses. Beispielsweise ist der Befestigungsbereich 116 plattenförmig ausgebildet, wie in der Ausführungsform der Figur 1 dargestellt.

Durch den Aufnahmebereich 114 wird der Behälter 108 in einen linken und einen rechten Behälterbereich aufgeteilt. Die linken und rechten Behälterbereiche sind durch einen Kanal 120 miteinander verbunden, über den ein Flüssigkeitsaustausch von Betriebsflüssigkeit zwischen dem linken und dem rechten Behälterbereich stattfinden kann.

Über den Einfüllstutzen 122, der auf der Oberseite 112 des Behälters 108 ausgebildet ist, kann also Betriebsflüssigkeit in beide Behälterbereiche eingefüllt werden, da diese ja über den Kanal 120 verbunden sind. Beim Nachfüllen von Betriebsflüssigkeit läuft diese von dem rechten Behälterbereich über den Kanal 120 in den linken Behälterbereich, sodass auch dieser befüllt wird.

Der Aufnahmebereich 114, der durch den Behälter 108 gebildet wird, wird nach vorne durch den Kanal 120 abgeschlossen. Die Größe des Aufnahmebereichs 114 ist vorzugsweise so gewählt, dass dessen Erstreckung in x-Richtung, d.h. in Längsrichtung des Fahrzeugs, etwas größer ist als die Erstreckung des Schlosses in x-Richtung. Dadurch steht der Behälter 108, insbesondere mit seinem Kanal 120, nach vorn über die Erstreckung des Schlosses hervor. Dies hat den Vorteil, dass ein Fußgänger bei einem Aufprall im Bereich des Schlosses, nicht auf das Schloss trifft, sondern auf den Behälter.

In dem Behälter 108 sind Verstärkungsrippen 124 angeordnet, die quer zur Erstreckungsrichtung des Obergurtbereichs 104 verlaufen. Durch die Verstärkungsrippen 124 können die Belastungen, insbesondere die Torsionskräfte, die im Obergurtbereich 104 auftreten können, besser aufgenommen werden.

Aufgrund des Kanals 120 kann ein Flüssigkeitsaustausch zwischen den einzelnen von den Verstärkungsrippen 124 gebildeten Segmenten des Behälters 108 stattfinden.

Der Behälter 108 ist beispielsweise über einen in der Figur 1 nicht gezeigten Schlauch mit einer Wischwaschanlage des Kraftfahrzeugs verbunden. In diesem Fall dient der Behälter 108 also zur Aufnahme von Wasser mit oder ohne Zusätzen für die Wischwaschanlage des Kraftfahrzeugs.

Im eingebauten Zustand des Trägers 100 befindet sich der Obergurtbereich 104 je nach Fahrzeugtyp im Bein- und/oder Hüftaufprallbereich eines Fußgängers. Da es sich bei dem Behälter 108 um einen Hohlkörper handelt, wirkt dieser als Energieabsorptionskörper bei einem Fußgängeraufprall, und lindert aufgrund des dadurch zur Verfügung gestellten Deformationsweges die Folgen eines solchen Aufpralls. Ein solcher Deformationsweg ist besonders vorteilhaft am Übergang zwischen der Fronteinheit des Kraftfahrzeugs und der Fronthaube, insbesondere in Kombination mit einer so genannten aktiven Haube.

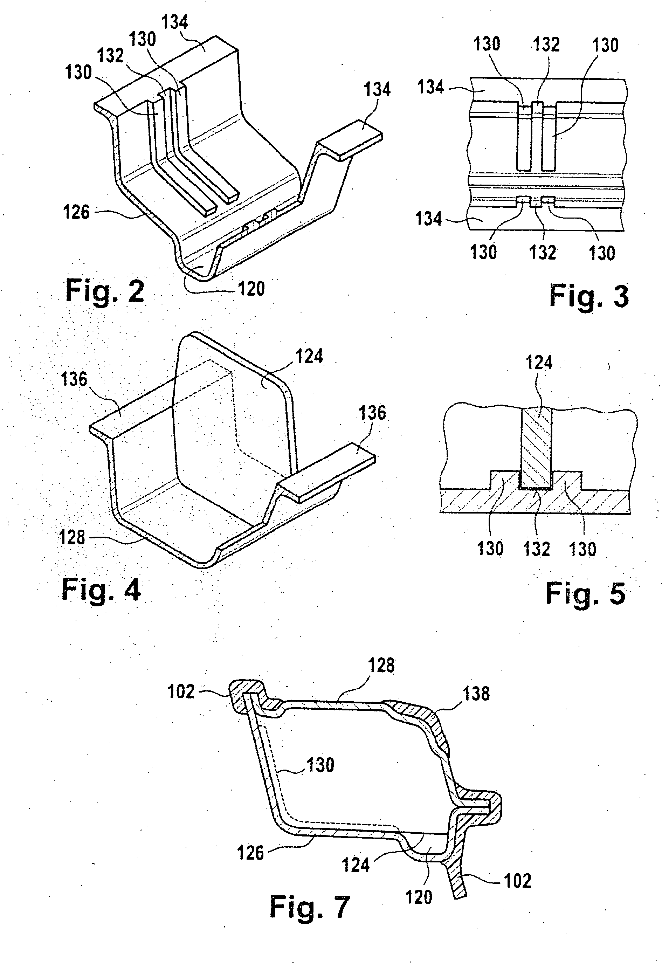

Die Figuren 2 bis 5 zeigen eine Ausführungsform des Behälters 108 mit einem unteren Behälterteil 126 und einem oberen Behälterteil 128 (vgl. Figur 4). Die Figur 2 zeigt in perspektivischer Ansicht einen Abschnitt des unteren Behälterteils 126. Am Rand des unteren Behälterteils 126 ist der Kanal 120 rinnenförmig ausgebildet. Quer zur Erstreckungsrichtung des unteren Behälterteils 126 verlaufen schienenförmige Rippen 130, zwischen denen eine Rille 132 ausgebildet ist, wie auch in der Figur 3 dargestellt ist.

Die Figur 4 zeigt einen Abschnitt des oberen Behälterteils 128 in perspektivischer Ansicht. Dieser Abschnitt hat eine der Verstärkungsrippen 124 (vgl. Figur 1). Zur Herstellung des Behälters 108 werden das untere Behälterteil 126 und das obere Behälterteil 128 zusammengefügt, indem die Verstärkungsrippen 124 jeweils in einer Rille 132 des unteren Behälterteils 126 positioniert werden, wie in der Figur 5 dargestellt. In dieser Position werden die Behälterteile 126 und 128 miteinander verbunden, beispielsweise durch ein Schweißverfahren oder durch Umspritzen. Beispielsweise erfolgt die Verschweißung zwischen den Verstärkungsrippen 124 und den Rippen 130 durch ein Ultraschall-Schweißverfahren oder durch Mirror Welding.

Die in der Figur 4 exemplarisch gezeigte Verstärkungsrippe 124 ist dabei so geformt, dass sie den Kanal 120 nicht verschließt, um so den Austausch von Betriebsflüssigkeit zwischen den einzelnen zwischen den Verstärkungsrippen 124 gebildeten Segmenten und zwischen den linken und rechten Behälterbereichen zu ermöglichen.

Zur Erhöhung der Steifigkeit des Behälters 108 können entlang einer Begrenzung des unteren Behälterteils 126 Fügeflächen 134 und entlang einer Begrenzung des oberen Behälterteils 128 Fügeflächen 136 angeordnet sein, wie in den Figuren 2 und 4 dargestellt. Bei der Herstellung des Behälters 108 werden die Fügeflächen 134 und 136 aufeinander gebracht, um diese zum Beispiel durch ein Schweißverfahren oder durch Umspritzen miteinander zu verbinden.

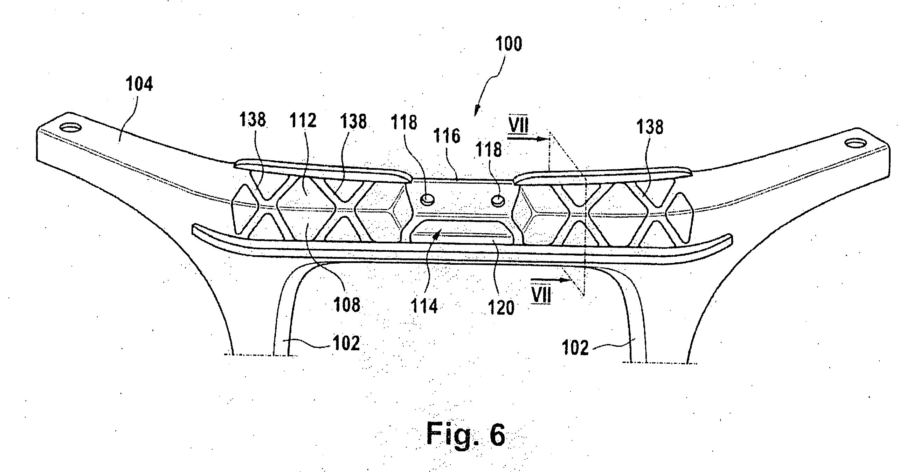

Die Figur 6 zeigt eine weitere Ausführungsform eines erfindungsgemäßen Trägers 100. Bei dieser Ausführungsform wird zunächst der Behälter 108 hergestellt. Der Behälter 108 wird dann umspritzt, sodass man den Träger 100 mit dem Trägerteil 102 und den darin integrierten Behälter 108 erhält. Dies kann so erfolgen, dass der Behälter 108 oder dessen Behälterteile 126 und 128 (vgl. Figuren 2 bis 5) in ein Kunststoffspritzgusswerkzeug eingelegt werden.

Durch nachfolgende Umspritzung des Behälters 108 bzw. von dessen Teilen 126, 128, wird dann der Träger 100 in einem Kunststoffspritzgussverfahren hergestellt. Dabei können für das Trägerteil 102 und den Behälter 108 unterschiedliche Kunststoffe eingesetzt werden.

Insbesondere wird vorzugsweise für den Behälter 108 ein transparenter oder teiltransparenter Kunststoff eingesetzt, so dass visuell durch einen Benutzer leicht der Flüssigkeitsstand von Betriebsflüssigkeit in dem Behälter 108 erfasst werden kann: In diesem Fall ist es vorteilhaft, wenn der Behälter 108 nicht vollständig durch den Kunststoff des Trägerteils 102 abgedeckt wird, damit der Flüssigkeitsstand in dem Behälter 108 visuell erfassbar bleibt.

In der Ausführungsform der Figur 6 ist dies durch kreuzförmige Bereiche 138 des Trägerteils 102 gelöst, die den Behälter 108 innerhalb des Trägers 100 festhalten und dennoch hinreichend die Sicht auf den Behälter 108 freigeben, um den Flüssigkeitsstand kontrollieren zu können.

Bei der hier betrachteten Ausführungsform ist der Befestigungsbereich 116 nicht als Teil des Behälters 108, sondern als Teil des Trägerteils 102 ausgebildet. Der Befestigungsbereich 116 wird also beim Umspritzen des Behälters 108 bei der Herstellung des Trägerteils 102 angeformt.

Die Figur 7 zeigt einen Querschnitt durch den Träger 100 im Bereich des Behälters 108.

### Bezugszeichenliste

- 100: Träger
- 102: Trägerteil
- 104: Obergurtbereich
- 106: Aufnahmebereich
- 108: Behälter
- 110: Schweißverbindung
- 111: Frontseite
- 112: Oberseite
- 114: Aufnahmebereich
- 116: Befestigungsbereich
- 118: Loch
- 120: Kanal
- 122: Einfüllstutzen
- 124: Verstärkungsrippe
- 126: Behälterteil
- 128: Behälterteil
- 130: Rippe
- 132: Rille
- 134: Fügefläche
- 136: Fügefläche
- 138: kreuzförmiger Bereich

## Patentansprüche

1. Träger für die Fronteinheit eines Kraftfahrzeugs mit einem in dem Träger integrierten Behälter (108) zur Aufnahme einer Betriebsflüssigkeit, wobei der Behälter in einer Einbauposition des Trägers in dem Kraftfahrzeug in Höhe eines Bein- oder Hüftaufprallbereichs eines Fußgängers angeordnet ist, wobei durch eine Frontseite des Behälters eine Frontfläche (111) des Trägers gebildet wird, wobei der Behälter bei einem Aufprall eines Fußgängers auf die Fahrzeugfront als Energieabsorptionskörper wirkt.

2. Träger nach Anspruch 1, wobei durch eine Oberseite (112) des Behälters eine obere Begrenzung des Trägers gebildet wird.

3. Träger nach Anspruch 1 oder 2, wobei durch eine Wandung des Behälters ein Aufnahmebereich (114) für ein Schloss zur Verriegelung einer Fronthaube des Kraftfahrzeugs gebildet wird.

4. Träger nach Anspruch 3, wobei der Aufnahmebereich nach vorne durch einen Abschnitt (120) des Behälters abgeschlossen wird.

5. Träger nach Anspruch 3 oder 4, wobei der Aufnahmebereich nach hinten durch einen Befestigungsbereich (116) der Wandung abgeschlossen wird, wobei der Befestigungsbereich zur Befestigung des Schloss und des Trägers an der Karosserie des Kraftfahrzeugs ausgebildet ist, und wobei der Befestigungsbereich massiv ausgebildet ist.

6. Träger nach einem der vorhergehenden Ansprüche, wobei an einer oberen Begrenzung des Trägers eine Öffnung (122) des Behälters zum Nachfüllen der Betriebsflüssigkeit zugänglich ist.

7. Träger nach einem der vorhergehenden Ansprüche, wobei der Behälter entlang eines Obergurtbereichs (104) des Trägers angeordnet ist.

8. Träger nach einem der vorhergehenden Ansprüche, mit einem Trägerteil (102), das in seinem Obergurtbereich (104) einen Aufnahmebereich (106) für den Behälter aufweist.

9. Verfahren zur Herstellung eines Trägers (100) nach einem der vorhergehenden Ansprüche, mit folgenden Schritten:
- Herstellung des Behälters (108) oder von ein oder mehreren Behälterteilen (126, 128),
- Integration des Behälters oder der ein oder mehreren Behälterteile in den Träger.

10. Verfahren nach Anspruch 9, wobei ein Trägerteil (102) hergestellt wird, und der Behälter oder die Behälterteile durch Verschweißen mit dem Trägerteil verbunden werden.

11. Verfahren nach Anspruch 10, wobei das Verschweißen in Randbereichen des Behälters erfolgt, und wobei in einem mittleren Bereich des Trägers eine Schraubverbindung zur Befestigung des Behälters an dem Trägerteil ausgebildet wird.

12. Verfahren nach Anspruch 11 wobei durch die Schraubverbindung ein Schloss an dem Träger befestigt wird.

13. Verfahren nach einem der vorhergehenden Ansprüche 9 bis 12, wobei der Behälter oder die Behälterteile durch Umspritzen in den Träger integriert werden.

14. Kraftfahrzeug-Fronteinheit mit einem Träger nach einem der vorhergehenden Ansprüche 1 bis 8.

15. Vorrichtung zum Fußgängerschutz bei einem Fußgängeraufprall auf eine Fahrzeugfront eines Kraftfahrzeugs mit einem Träger nach einem der vorigen Ansprüche 1 bis 8.

## Claims

1. Support for the front unit of a motor vehicle with a container (108) which is integrated in the support and has the purpose of holding an operating fluid, wherein in an installation position of the support the container is arranged in the motor vehicle at the level of a leg impact region or hip impact region of a pedestrian, wherein a front face (111) of the support is formed by a front side of the container, wherein in the event of an impact of a pedestrian against the front of the vehicle the container acts as an energy absorption body.

2. Support according to Claim 1, wherein an upper boundary of the support is formed by an upper side (112) of the container.

3. Support according to Claim 1 or 2, wherein a mounting region (114) for a lock for locking a front bonnet of the motor vehicle is formed by a wall of the container.

4. Support according to Claim 3, wherein the mounting region is closed off at the front by a section (120) of the container.

5. Support according to Claim 3 or 4, wherein the mounting region is closed off at the rear by an attachment region (116) of the wall, wherein the attachment region is designed for the attachment of the lock and of the support to the bodywork of the motor vehicle and wherein the attachment region is of solid design.

6. Support according to one of the preceding claims, wherein an opening (122) of the container for replenishing the operating fluid is accessible at an upper boundary of the support.

7. Support according to one of the preceding claims, wherein the container is arranged along an upper chord region (104) of the support.

8. Support according to one of the preceding claims, having a support part (102) which has a mounting region (106) for the container in its upper chord region (104).

9. Method for manufacturing a support (100) according to one of the preceding claims, having the following steps:
- production of the container (108) or of one or more container parts (126, 128),
- integration of the container or of the one or more container parts into the support.

10. Method according to Claim 9, wherein a support part (102) is produced, and the container or the container parts are connected by welding to the support part.

11. Method according to Claim 10, wherein the welding takes place in edge regions of the container, and wherein a screw connection for attaching the container to the support part is formed in a central region of the support.

12. Method according to Claim 11, wherein a lock is attached to the support by means of the screw connection.

13. Method according to one of the preceding Claims 9 to 12, wherein the container or the container parts are integrated into the support by encapsulation by injection moulding.

14. Motor vehicle front unit having a support according to one of the preceding Claims 1 to 8.

15. Device for protecting pedestrians in the event of an impact with a pedestrian against a vehicle front of a motor vehicle having a support according to one of the preceding Claims 1 to 8.

## Revendications

1. Support pour l'unité avant d'un véhicule automobile comprenant un récipient (108) intégré dans le support pour recevoir un liquide fonctionnel, le récipient étant disposé dans une position d'installation du support dans le véhicule automobile à la hauteur d'une région d'impact avec les jambes ou les hanches d'un piéton, une surface avant (111) du support étant formée par un côté avant du récipient, le récipient, en cas de collision avec un piéton, agissant sur l'avant du véhicule comme un corps absorbant l'énergie.

2. Support selon la revendication 1, dans lequel une limitation supérieure du support est formée par un côté supérieur (112) du récipient.

3. Support selon la revendication 1 ou 2, dans lequel une région de réception (114) pour une serrure destinée à verrouiller un capot avant du véhicule automobile est formée par une paroi du récipient.

4. Support selon la revendication 3, dans lequel la région de réception est terminée vers l'avant par une portion (120) du récipient.

5. Support selon la revendication 3 ou 4, dans lequel la région de réception est terminée vers l'arrière par une région de fixation (116) de la paroi, la région de fixation étant réalisée pour fixer la serrure et le support sur la carrosserie du véhicule automobile, et la région de fixation étant réalisée sous forme massive.

6. Support selon l'une quelconque des revendications précédentes, dans lequel une ouverture (122) du récipient sur une limitation supérieure du support est accessible pour effectuer un remplissage avec du liquide fonctionnel supplémentaire.

7. Support selon l'une quelconque des revendications précédentes, dans lequel le récipient est disposé le long d'une région de sangle supérieure (104) du support.

8. Support selon l'une quelconque des revendications précédentes, comprenant une partie de support (102), qui présente dans sa région de sangle supérieure (104) une région de réception (106) pour le récipient.

9. Procédé de fabrication d'un support (100) selon l'une quelconque des revendications précédentes, comprenant les étapes consistant à :
- fabriquer le récipient (108) ou une ou plusieurs parties du récipient (126, 128),
- intégrer le récipient ou la ou plusieurs parties de récipient dans le support.

10. Procédé selon la revendication 9, dans lequel une partie de support (102) est fabriquée et le récipient ou les parties de récipient sont connectées à la partie de support par soudage.

11. Procédé selon la revendication 10, dans lequel le soudage a lieu dans les régions de bord du récipient et dans lequel, dans une région centrale du support, on réalise une connexion vissée pour la fixation du récipient à la partie de support.

12. Procédé selon la revendication 11, dans lequel une serrure est fixée au support par la connexion vissée.

13. Procédé selon l'une quelconque des revendications précédentes 9 à 12, dans lequel le récipient ou les parties de récipient sont intégrés dans le support par surmoulage.

14. Unité avant de véhicule automobile comprenant un support selon l'une quelconque des revendications précédentes 1 à 8.

15. Dispositif pour la protection des piétons dans le cas d'une collision avec un piéton à l'avant d'un véhicule automobile, comprenant un support selon l'une quelconque des revendications précédentes 1 à 8.
